# EUROPEAN PATENT APPLICATION

(11) **EP 4 443 576 A1**
(43) Date of publication of application: **09.10.2024**
(21) Application number: 22897549.6
(22) Date of filing: 31.10.2022
(51) Int. Cl.: H01M 10/04, H01M 50/552, H01M 50/559

(54) **BATTERY APPARATUS AND ELECTRONIC DEVICE**

(30) Priority: 29.11.2021 CN 202122963143 U
(71) Applicant: Guangdong Mic-power New Energy Co., Ltd., Guangdong 516055 (CN)
(72) Inventor: LI, Zhengdong, Huizhou, Guangdong 516055 (CN); CHEN, Zhiyong, Huizhou, Guangdong 516055 (CN); LIAO, Weixin, Huizhou, Guangdong 516055 (CN); XU, Jiangtao, Huizhou, Guangdong 516055 (CN)
(74) Representative: Rau, Schneck & Hübner Patentanwälte Rechtsanwälte PartGmbB
(86) International application number: PCT/CN2022/128705
(87) International publication number: WO 2023/093466

(57) **Abstract**

The present disclosure relates to a battery apparatus and an electronic device. The battery apparatus comprises: a housing, a cell and an electric connector; the cell is provided inside the housing, is connected to the housing, is in a spirally wound structure, and comprises a positive plate and a negative plate, a length of the negative plate being greater than that of the positive plate to form a redundant length; the housing comprises a positive end-face which is opposite to one end-face of the cell, and a negative end-face which is opposite to the other end-face of the cell; the electric connector is provided around a middle part of the positive end-face and/or the negative end-face and has a first end and a second end which are spaced apart, the first end being connected to the positive end-face and/or the negative end-face, and the electric connector is configured for weakening or cancelling a magnetic field generated by the redundant length of the negative plate. (FIG. 1)

## Description

### CROSS-REFERENCE TO RELATED APPLICATIONS

The present disclosure claims priority to a Chinese patent application No. 202122963143.0 filed with the CNIPA on November 29, 2021 and entitled "BATTERY APPARATUS AND ELECTRONIC DEVICE", which is hereby incorporated by reference in its entirety.

### TECHNICAL FIELD

The present disclosure relates to the field of battery apparatus, and particularly to a battery apparatus and an electronic device.

### BACKGROUND

A battery, such as a button battery, a cylindrical battery, etc., typically employs a spirally wound cell. Such a cell is characterized by high energy density and a simple manufacturing process. However, since spirally wound positive and negative plates usually generate magnetic field, especially a negative plate is usually of a length greater than that of a positive plate: this causes that the magnetic fields generated by the positive plate and the negative plate cannot cancel each other. The magnetic fields influence the sound quality of electronic products, such as headphones, resulting in a noise floor, which greatly degrades the user's experience.

Therefore, there is a need to provide a new technical solution to solve the above technical problem.

### SUMMARY

An objective of the present disclosure is to provide a new technical solution of a battery apparatus.

According to an aspect of the present disclosure, a battery apparatus is provided. The battery apparatus comprises: a housing, a cell and an electric connector; the cell is provided inside the housing, is connected to the housing, is in a spirally wound structure, and comprises a positive plate and a negative plate, a length of the negative plate being greater than that of the positive plate to form a redundant length;
the housing comprises a positive end-face which is opposite to one end-face of the cell, and a negative end-face which is opposite to the other end-face of the cell;
the electric connector is provided around a middle part of the positive end-face and/or the negative end-face and has a first end and a second end which are spaced apart, the first end is connected to the positive end-face and/or the negative end-face, and the electric connector is configured for weakening or cancelling a magnetic field generated by the redundant length of the negative plate.

Optionally, the electric connector comprises a first segment and a second segment which are connected, the first end is located on the first segment, the second end is located on the second segment, the second segment is provided around the middle part of the positive end-face and/or the negative end-face, and the second segment is spaced apart from the positive end-face and/or the negative end-face.

Optionally, the first end is welded to the positive end-face and/or the negative end-face.

Optionally, the electric connector as a whole is arc-shaped or polygonal.

Optionally, a separator is provided between the second segment and the positive end-face and/or the negative end-face of the housing.

Optionally, the electric connector further comprises a third segment, which is connected to the second segment and extends outward along a side wall of the housing.

Optionally, the electric connector is arc-shaped, and an outer diameter of the arc is 0.8 to 0.9 times a diameter of the positive end-face and/or the negative end-face of the housing; an inner diameter of the arc is 0.6 to 0.7 times the diameter of the positive end-face and/or the negative end-face of the housing.

Optionally, the electric connector is made of Ni or Ni-plated steel sheet.

Optionally, the electric connector spirally ascends along an axial direction of the housing, and the electric connector is constructed in multiple layers.

According to another aspect of the present disclosure, an electronic device is provided. The electronic device comprises the above battery apparatus and a speaker, the battery apparatus and the speaker are provided inside the electronic device, and one end-face of the battery apparatus is opposite to the speaker;
under a condition that the positive end-face of the battery apparatus is facing towards the speaker, the electric connector is provided on the positive end-face, and a direction from the first end to the second end of the electric connector is the same as a winding direction of the cell;
under a condition that the negative end-face of the battery apparatus is facing towards the speaker, the electric connector is provided on the negative end-face, and the direction from the first end to the second end of the electric connector is opposite to the winding direction of the cell.

In the embodiments of the present disclosure, by providing the electronic device on the positive end-face and/or the negative end-face of the battery apparatus, it is possible to weaken or eliminate the magnetic field generated by the cell inside the button battery, thereby ensuring the normal operation of the electronic device and improving the experience of a user.

Other features and advantages of the present disclosure will become apparent from the following detailed description of exemplary embodiments of the present disclosure with reference to the accompanying drawings.

### BRIEF DESCRIPTION OF THE DRAWINGS

The accompanying drawings, which constitute a part of the description, illustrate embodiments of the present disclosure and, together with the description thereof, serve to explain the principles of the present disclosure.
FIG. 1 is a schematic diagram of a battery apparatus with an electric connector provided on a positive end-face according to an embodiment of the present disclosure.
FIG. 1a is a schematic diagram from the first perspective of a battery apparatus with an electric connector provided on a positive end-face according to an embodiment of the present disclosure.
FIG. 1b is a schematic diagram from the second perspective of a battery apparatus with an electric connector provided on a positive end-face according to an embodiment of the present disclosure.
FIG. 1c is a schematic diagram from the third perspective of a battery apparatus with an electric connector provided on a positive end-face according to an embodiment of the present disclosure.
FIG. 1d is a schematic diagram from the fourth perspective of a battery apparatus with an electric connector provided on a positive end-face according to an embodiment of the present disclosure.
FIG. 1e is a schematic diagram from the fifth perspective of a battery apparatus with an electric connector provided on a positive end-face according to an embodiment of the present disclosure.
FIG. 2 is a schematic diagram of a battery apparatus with an electric connector provided on a negative end-face according to an embodiment of the present disclosure.
FIG. 2a is a schematic diagram from the sixth perspective of a battery apparatus with an electric connector provided on a negative end-face according to an embodiment of the present disclosure.
FIG. 2b is a schematic diagram from the seventh perspective of a battery apparatus with an electric connector provided on a negative end-face according to an embodiment of the present disclosure.
FIG. 2c is a schematic diagram from the eighth perspective of a battery apparatus with an electric connector provided on a negative end-face according to an embodiment of the present disclosure.
FIG. 2d is a schematic diagram from the ninth perspective of a battery apparatus with an electric connector provided on a negative end-face according to an embodiment of the present disclosure.
FIG. 2e is a schematic diagram from the tenth perspective of a battery apparatus with an electric connector provided on a negative end-face according to an embodiment of the present disclosure.
FIG. 2f is a schematic diagram from the eleventh perspective of a battery apparatus with an electric connector provided on a negative end-face according to an embodiment of the present disclosure.
FIG. 3 is a schematic diagram of a cell according to an embodiment of the present disclosure.
FIG. 4 is a schematic diagram in which the redundant length of the negative plate at the negative end-face is wound clockwise according to the embodiment.
FIG. 4a is the first schematic diagram in which magnetic fields of the redundant lengths of the electric connector and the negative plate are cancelled at the positive end-face and the negative end-face according to an embodiment of the present disclosure.
FIG. 4b is the second schematic diagram in which magnetic fields of the redundant lengths of the electric connector and the negative plate are cancelled at the positive end-face and the negative end-face according to an embodiment of the present disclosure.
FIG. 5 is a schematic diagram of a multi-layer cell according to an embodiment of the present disclosure.
FIG. 6a is the first schematic diagram of the interior of an electronic device according to the embodiment of the present disclosure.
FIG. 6b is the second schematic diagram of the interior of an electronic device according to the embodiment of the present disclosure.

### Description of reference signs:

1, positive end-face; 2, negative end-face; 3, first end; 4, second end; 5, first segment; 6, second segment; 7, third segment; 8a, first electric connector; 8b, second electric connector; 9, sidewall; 10, mandrel; 11, cell; 11a, redundant length first end; 11b, redundant length second end; 12, speaker; 13, positive plate; 14, negative plate; 15, separator.

### DETAILED DESCRIPTION

Various exemplary embodiments of the present disclosure will now be described in detail with reference to the accompanying drawings. It is to be noted that unless otherwise specified, the scope of present disclosure is not limited to relative arrangements, numerical expressions and values of components and steps as illustrated in the embodiments.

Description to at least one exemplary embodiment is for illustrative purpose only, and in no way implies any restriction on the present disclosure or application or use thereof.

Techniques and devices known to those skilled in the prior art may not be discussed in detail; however, such techniques and devices shall be regarded as part of the description where appropriate.

In all the examples illustrated and discussed herein, any specific value shall be interpreted as illustrative rather than restrictive. Different values may be available for alternative examples of the exemplary embodiments.

It is to be noted that similar reference numbers and alphabetical letters represent similar items in the accompanying drawings. In the case that a certain item is identified in a drawing, further reference thereof may be omitted in the subsequent drawings.

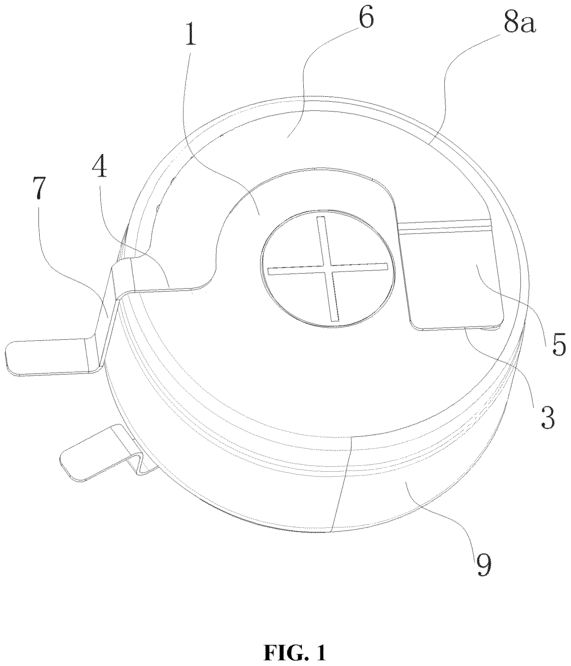

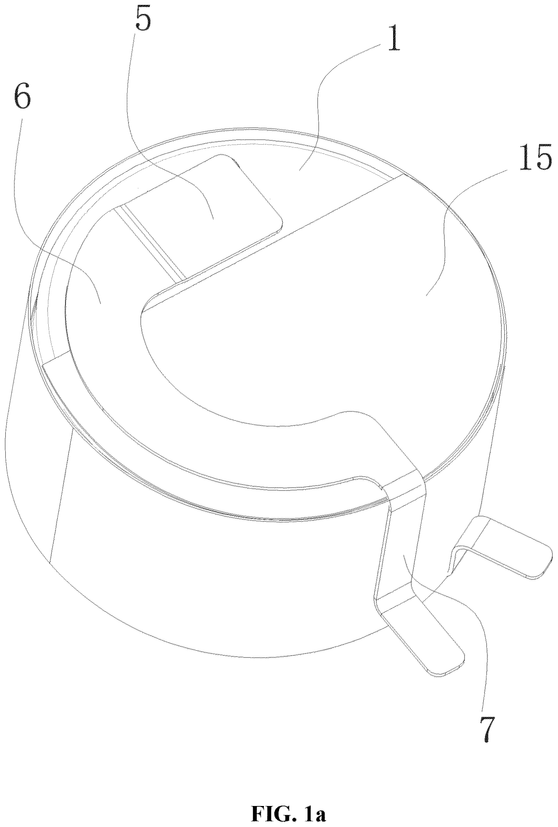

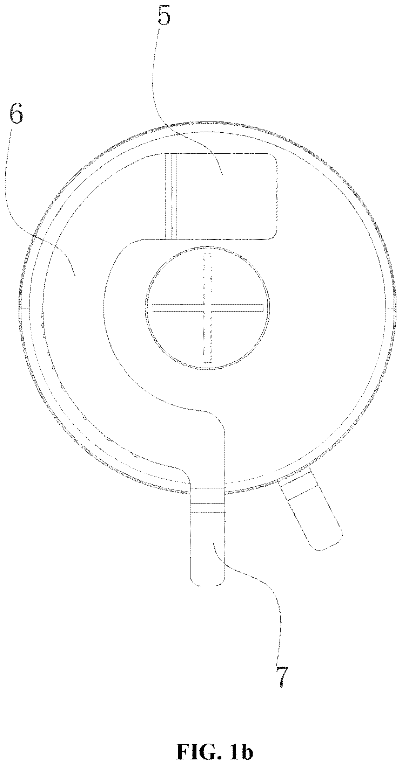

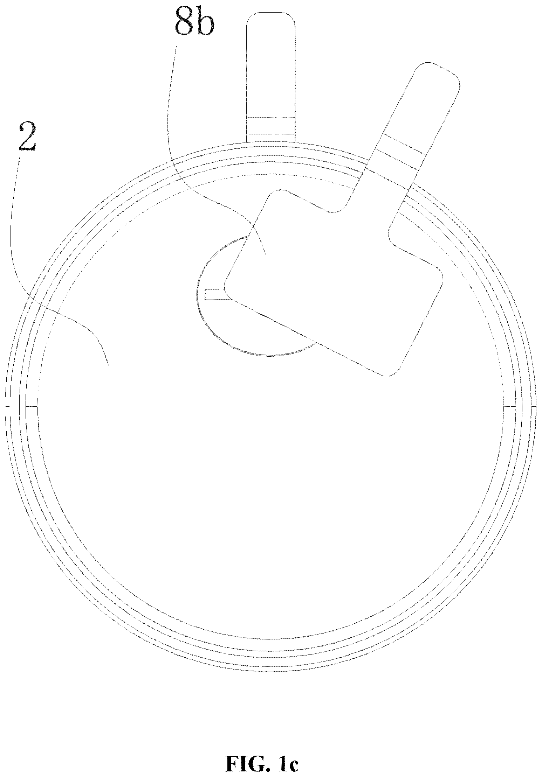

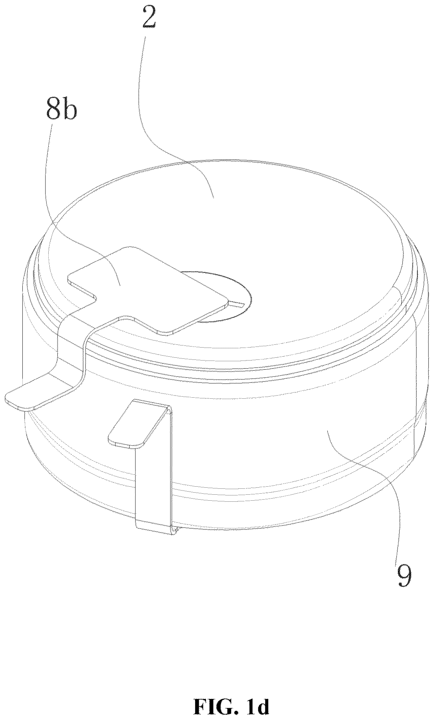

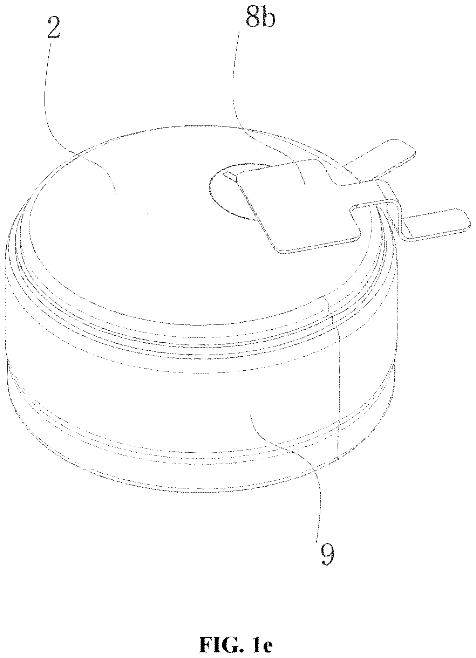

According to an embodiment of the present disclosure, a battery apparatus is provided. As shown in FIG. 1, the battery apparatus comprises: a housing, a cell 11, and an electric connector. The cell 11 is provided inside the housing. The cell 11 is connected to the housing. The cell 11 is in a spirally wound structure. The cell 11 comprises a positive plate 13 and a negative plate 14. A length of the negative plate 14 is greater than that of the positive plate 13 to form a redundant length.

The housing comprises a positive end-face 1 and a negative end-face 2. One end-face of the cell 11 is opposite to the positive end-face 1. The other end-face of the cell 11 is opposite to the negative end-face 2.

The electric connector is provided around the middle part of the positive end-face 1 and/or the negative end-face 2. The electric connector has a first end 3 and a second end 4. The first end 3 and the second end 4 are spaced apart. The first end 3 is connected to the positive end-face 1 and/or the negative end-face 2. The electric connector is configured for reducing or cancelling the magnetic field generated by the redundant length of the negative plate.

The battery apparatus may be a button battery, also known as a coin battery, which refers to a battery with an appearance and size like the button. The button battery is small in volume and thin in thickness, and are widely used in miniaturized electronic products.

The battery apparatus may also be a cylindrical battery, a pouch battery, a lead-acid battery, etc.

Taking the button battery as an example, the battery apparatus comprises the housing. For instance, the housing comprises a positive cover and a negative cover that are snapped together. The negative cover is fitted inside the positive cover. The negative cover and the positive cover are provided opposite to each other. The positive cover has a positive end-face 1. The negative cover has a negative end-face 2. The positive end-face 1 and the negative end-face 2 are used for electrical connection with an external device.

It can also be that the housing comprises a cylindrical body with an open end and an upper cover. The upper cover is fitted over the open end.

Of course, the structure of the housing is not limited to the above embodiment, and may be set up by those skilled in the art according to actual needs.

The battery apparatus comprises the cell 11. The cell 11 comprises the positive plate 13 and the negative plate 14. The positive plate 13 is electrically connected to the positive cover through a positive tab. The negative plate 14 is electrically connected to the negative cover through a negative tab. The positive plate 13 and the negative plate 14 are spaced apart and form a spirally winding structure. The length of the negative plate 14 is greater than that of the positive plate 13 to form a redundant length.

The battery apparatus mainly relies on the movement of lithium ions between a positive electrode and a negative electrode to operate. That is, during the charging and discharging process of battery apparatus, lithium ions are embedded and de-embedded between the positive and negative electrodes, thereby generating a potential difference between the positive and negative electrodes. For example, when charging, the lithium ions in the lithium cobalt oxides are de-embedded from the positive electrode, pass through the electrolyte and the separator, and are embedded in the graphite at the negative electrode, at which time the negative electrode is in a lithium-rich state; when discharging, the lithium ions in the graphite are de-embedded from the negative electrode, pass through the electrolyte and the separator, and are embedded in the lithium cobalt oxides at the positive electrode, at which time the positive electrode is in a lithium-rich state; thus, the potential difference is generated between the positive and negative electrodes.

To prevent the situation where the lithium ions are in excess in the positive plate 13 or the negative plate 14 due to the failure of some active materials, the length of the negative plate 14 is usually set greater than that of the positive plate 13 to form the redundant length, thereby allowing the lithium ions to react fully. Since the cost of the cobalt acid lithium of the active material at the positive electrode is higher than that of the graphite of the active material at the negative electrode, the length of the negative plate 14 is chosen to be greater than that of the positive plate 13.

The axial direction of the cell 11 is perpendicular to the positive end-face 1 and the negative end-face 2. One end-face of the cell 11 is opposite to the positive end-face 1. The other end-face of the cell 11 is opposite to the negative end-face 2.

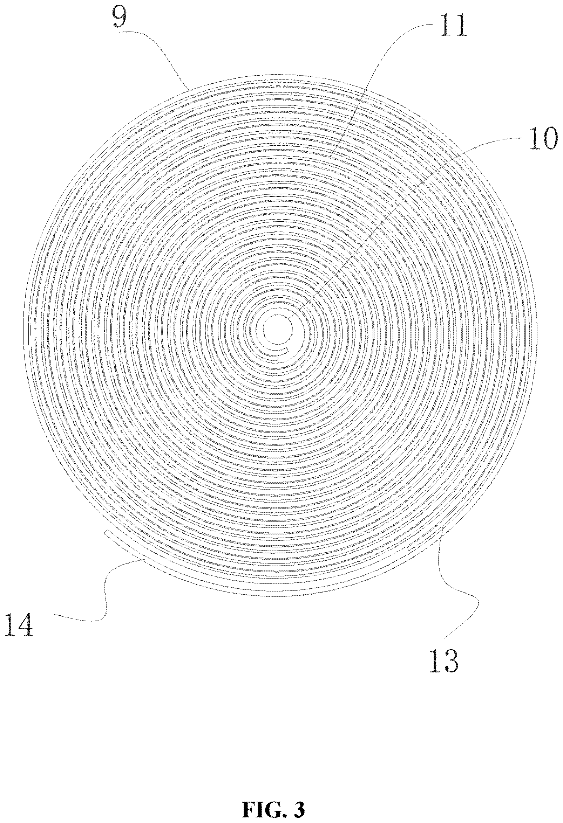

Optionally, a mandrel 10 is provided inside the cell 11. As shown in FIG. 3, the cell 11 is wound around the outer side of the mandrel 10 to form the spirally wound structure. The mandrel 10 may support the housing, such that the housing of the button battery is not susceptible to deformation under pressure, thereby ensuring the normal operation of the button battery.

Optionally, there is no mandrel 10 provided inside the cell 11. The cell 11 itself is wound to form the spirally wound structure.

Of course, the specific structure of the cell 11 is not limited herein, and may be set up by those skilled in the art according to actual needs.

The battery apparatus comprises the electric connector.

The electric connector is provided on the positive end-face 1. As shown in FIGS. 1a-1b, the electric connector is provided around the middle part of the positive end-face 1, that is, the inner side of the electric connector forms a hollow area which is provided opposite to the middle part of the positive end-face 1. This makes the electric connector form an arc-shaped structure. During charging and discharging, the current may follow an arc path on the electric connector to generate a magnetic field, and thus may achieve the effect of eliminating the magnetic field generated by the cell 11.

The electric connector comprises a first end 3 and a second end 4. The first end 3 is connected to the positive end-face 1. The first end 3 and the second end 4 are spaced apart. Since the electric connector is provided around the middle part of the positive end-face 1, the first end 3 of the electric connector is fixedly provided on the positive end-face 1, and the first end 3 and the second end 4 of the electric connector are spaced apart. Therefore, when the battery apparatus is in the process of charging and discharging, the electric connector may form an arc-shaped current path on the surface of the positive end-face 1, thereby forming a corresponding magnetic field.

For example, the electric connector comprises a first electric connector 8a and a second electric connector 8b. As shown in FIGS. 1a-1e, the first electric connector 8a is provided on the positive end-face 1 of the housing. The second electric connector 8b is provided on the negative end-face 2 of the housing. The first electric connector 8a is used for eliminating the magnetic field generated by the cell 11. In addition, the first electric connector 8a cooperates with the second electric connector 8b and forms an electrical path to the external electronic device.

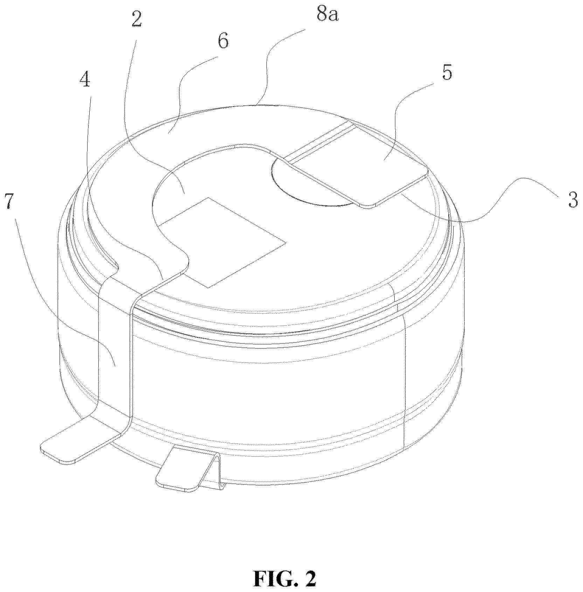

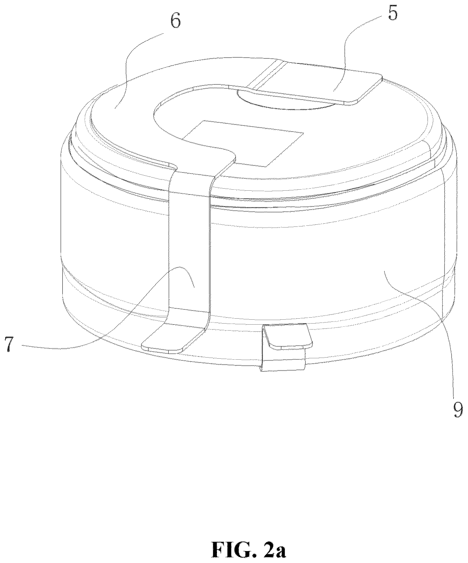

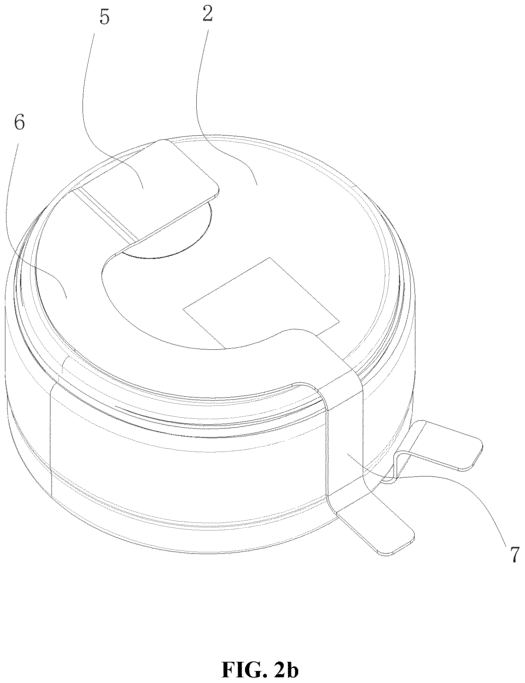

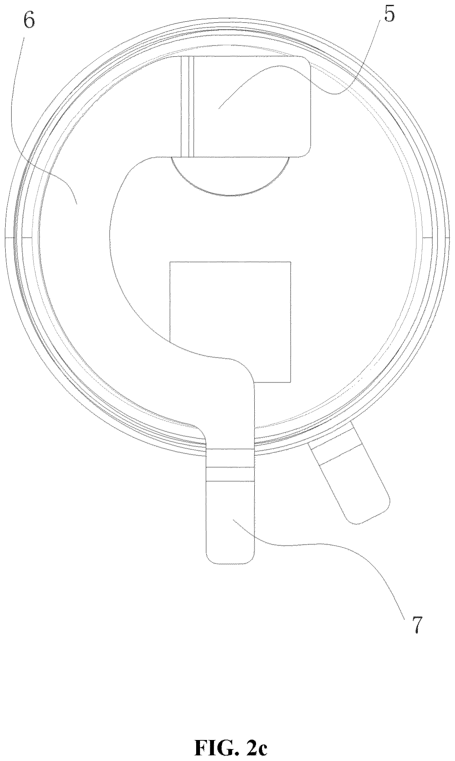

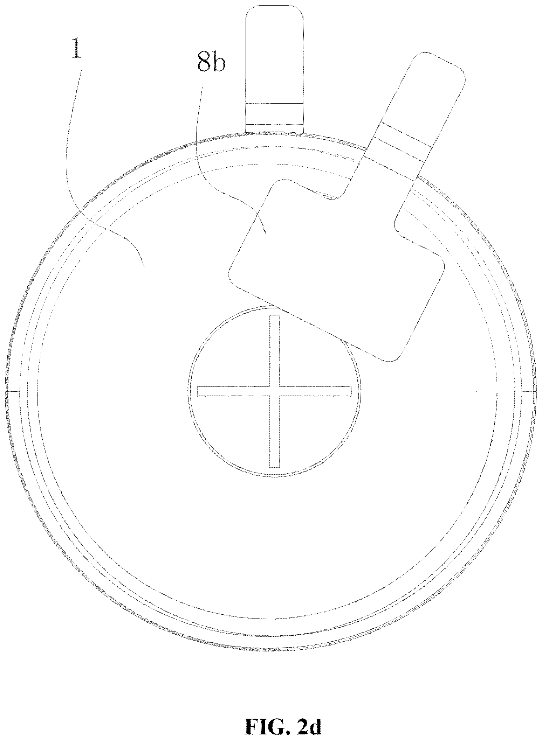

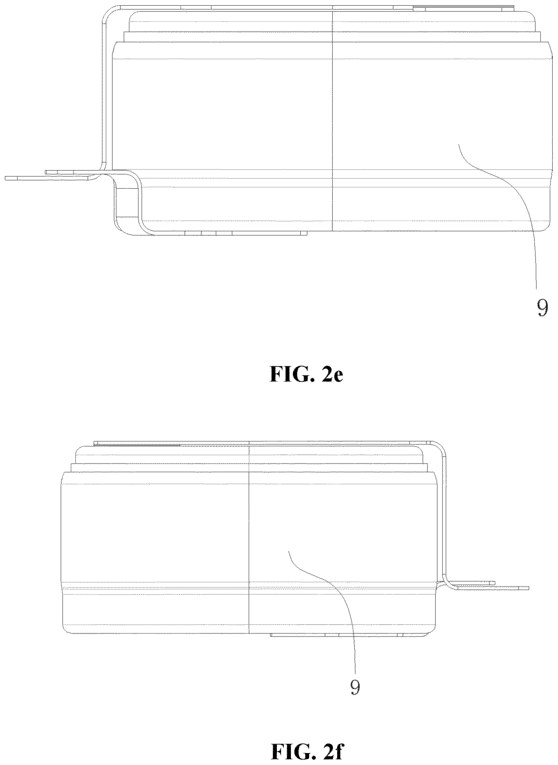

The electric connector is provided on the negative end-face 2. As shown in FIGS. 2 to 2c, the electric connector is provided around the middle part of the negative end-face 2, that is, the inner side of the electric connector forms a hollow area, which is provided opposite to the middle part of the negative end-face 2. This makes the electric connector form an arc-shaped structure. During charging and discharging, the current may follow an arc path on the electric connector to generate a magnetic field, and thus may achieve the effect of eliminating the magnetic field generated by the cell 11.

The electric connector comprises a first end 3 and a second end 4. The first end 3 is connected to the negative end-face 2. The first end 3 and the second end 4 are spaced apart. Since the electric connector is provided around the middle part of the negative end-face 2, the first end 3 of the electric connector is fixedly provided on the negative end-face 2, and the first end 3 and the second end 4 of the electric connector are spaced apart. Therefore, when the battery apparatus is in the process of charging and discharging, the electric connector may form an arc-shaped current path on the surface of the negative end-face 2, thereby forming a corresponding magnetic field.

For example, the electric connector comprises a first electric connector 8a and a second electric connector 8b. As shown in FIGS. 2d-2f, the first electric connector 8a is provided on the negative end-face 2 of the housing. The second electric connector 8b is provided on the positive end-face 1 of the housing. The first electric connector 8a is used for eliminating the magnetic field generated by the cell 11. In addition, the first electric connector 8a cooperates with the second electric connector 8b and forms an electrical path to the external electronic device.

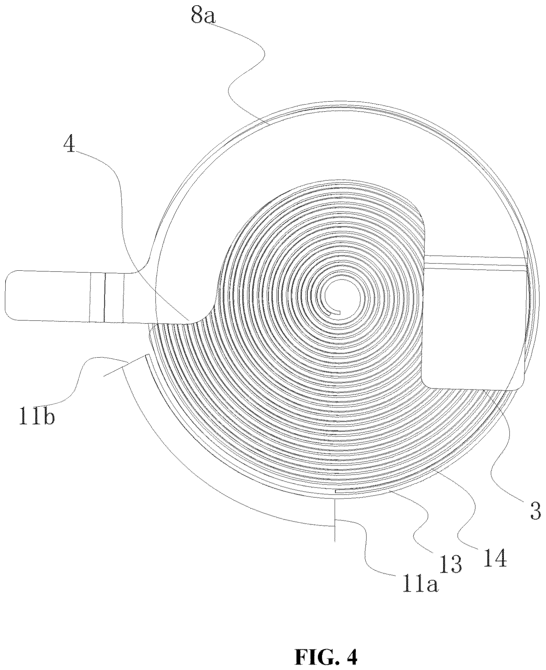

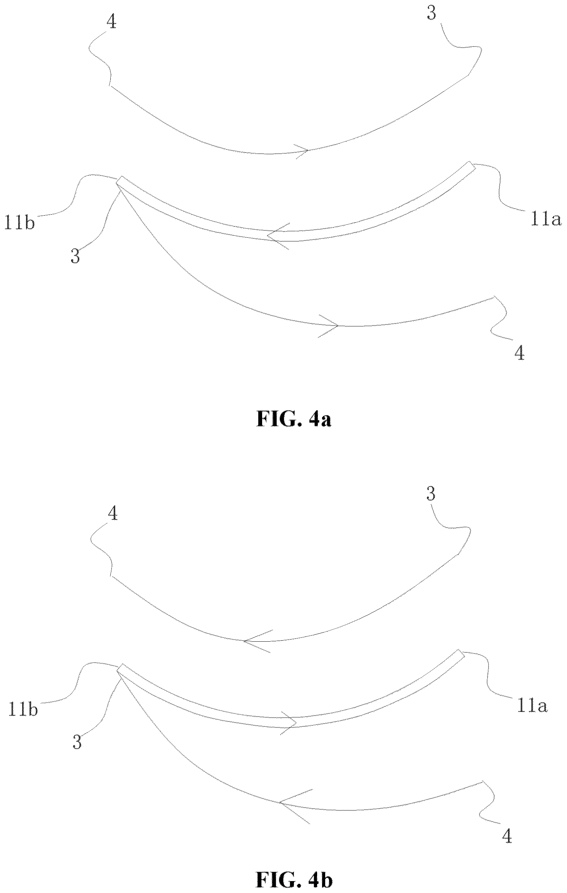

As shown in FIG. 4, the electric connector is configured for reducing or cancelling the magnetic field generated by the redundant length of the negative plate.

Right-hand rule: holding a solenoid with the right hand, letting the four fingers bend towards the direction of the current in the solenoid, and the end pointed to by the thumb is the N electrode of the solenoid.

For example, as shown in FIG. 4a, two ends of the redundant length are referred to as a redundant length first end 11a and a redundant length second end 11b, with the winding direction from the redundant length first end 11a to the redundant length second end 11b being clockwise.

During charging of the battery, the current at the negative electrode flows from the redundant length first end 11a to the redundant length second end 11b.

At this time, the first end 3 of the electric connector on the negative end-face 2 is connected to the redundant length second end 1 1b, and the direction from the first end 3 to the second end 4 of the electric connector on the negative end-face 2 is counterclockwise, that is, opposite to the winding direction of the redundant length of the negative plate.

In contrast, the direction from the first end 3 to the second end 4 of the electric connector on the positive end-face 1 is clockwise, that is, opposite to the winding direction of the redundant length of the negative plate.

For example, as shown in FIG. 4b, the two ends of the redundant length are referred to as the redundant length first end 11a and the redundant length second end 11b, with the winding direction from the redundant length first end 11a to the redundant length second end 11b being clockwise.

During discharging of the battery, the current at the negative electrode flows from the redundant length second end 1 1b to the redundant length first end 11a.

At this time, the first end 3 of the electric connector on the negative end-face 2 is connected to the redundant length second end 1 1b, and the direction from the first end 3 to the second end 4 of the electric connector on the negative end-face 2 is counterclockwise, that is, opposite to the winding direction of the redundant length of the negative plate;
In contrast, the direction from the first end 3 to the second end 4 of the electric connector on the positive end-face 1 is clockwise, that is, the same as the winding direction of the redundant length of the negative plate.

Additionally, the situation where the winding direction from the redundant length first end 11a to the redundant length second end 11b is counterclockwise is based on the same principle as the above embodiment, which will not be repeated herein.

Of course, it is also possible to provide the electric connector only on the positive end-face 1 or the negative end-face 2.

In one example, the electric connector comprises a first segment 5 and a second segment 6. The first segment 5 is connected to the second segment 6. The first end 3 is located on the first segment 5, and the second end 4 is located on the second segment 6. The second segment 6 is provided around the middle part of the positive end-face 1 and/or the negative end-face 2, and is spaced apart from the positive end-face 1 and/or the negative end-face 2.

For example, the electric connector comprises a first segment 5 and a second segment 6. The first end 3 of the first segment 5 is connected to the positive end-face 1 and/or the negative end-face 2. The other end of the first segment 5 is connected to one end of the second segment 6. The other end of the second segment 6 is the second end 4. The second segment 6 is provided around the middle part of the positive end-face 1 and/or the negative end-face 2, which allows the second segment 6 to form an arc-shaped current path around the middle part of the positive end-face 1 and/or the negative end-face 2, thereby generating a corresponding magnetic field to eliminate the magnetic field generated by the internal core of the housing.

Optionally, the first end 3 may be welded to the positive end-face 1 and/or the negative end-face 2.

The connection method may be soldering, resistance welding, arc welding, gas welding, etc., or other suitable and optimal connection methods, which is not limited herein.

In one example, the electric connector as a whole is arc-shaped or polygonal.

For example, the electric connector as a whole may be circular arc-shaped, or may be in a regular or irregular polygonal shape.

In one example, a separator 15 is provided between the second segment 6 and the positive end-face 1 and/or the negative end-face 2 of the housing.

The separator 15 is provided between the second segment 6 and the positive end-face 1 and/or the negative end-face 2 of the housing, which isolates the second segment 6 from the positive end-face 1 and/or the negative end-face 2, thus preventing a passage from forming between the second segment 6 and the positive end-face 1 and/or the negative end-face 2.

Optionally, the separator 15 may be made of insulating materials such as gummed paper or plastic sheets, or other suitable and optimal materials, which is not limited herein.

In one example, as shown in FIGS. 1d and 2a, the electric connector provided on the positive end-face 1 and/or the negative end-face 2 further comprises a third segment 7. The third segment 7 is connected to the second segment 6, and extends outward along the side wall 9 of the housing.

The third segment 7 of the electric connector is connected to the second segment 6, and extends outward along the side wall 9 of the housing of the battery apparatus. For example, it extends outward to form an external terminal. The external terminal is used for electrical connection with the external electronic device.

Optionally, the electric connector is arc-shaped. The outer diameter of the arc is 0.8 to 0.9 times the diameter of the positive end-face 1 and/or the negative end-face 2 of the housing. The inner diameter of the arc is 0.6 to 0.7 times the diameter of the positive end-face 1 and/or the negative end-face 2 of the housing.

For example, the electric connector is circular arc-shaped. The diameter of the positive end-face 1 and/or the negative end-face 2 of the battery apparatus is 10 mm. The outer arc diameter of the electric connector is 8 mm. The inner arc diameter of the electric connector is 6 mm.

Alternatively, the electric connector is circular arc-shaped. The diameter of the positive end-face 1 and/or the negative end-face 2 of the battery apparatus is 10 mm. The outer arc diameter of the electric connector is 9 mm. The inner arc diameter of the electric connector is 7 mm.

By setting the width of the electric connector in the above ratio range, it is possible to ensure that the current passing per unit area is neither too large nor too small. Consequently, the magnetic field generated by the electric connector may cancel the magnetic field generated by the cell 11, thereby maintaining the battery apparatus in a normal operation state.

Optionally, the electric connector is made of Ni or Ni-plated steel sheet.

The electric connector, made of the Ni or Ni-plated steel sheet, is cost-effective, is simple in installation, and also reduces the difficulty of its production process.

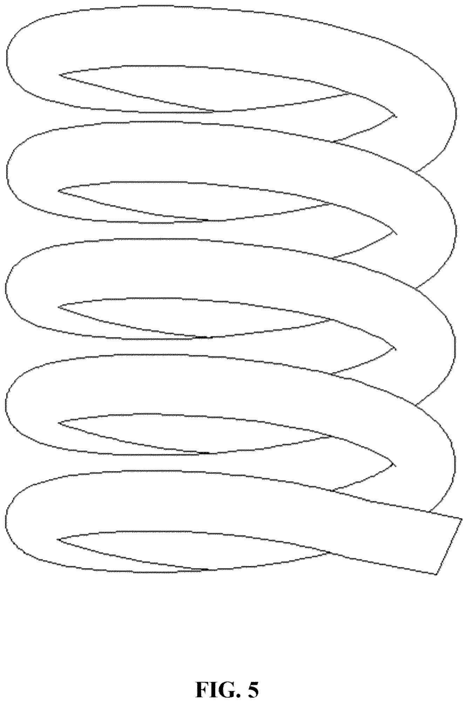

In one example, as shown in FIG. 5, the electric connector spirally ascends along the axial direction of the housing. The electric connector is constructed in multiple layers.

For example, the electric connector may spirally ascend along the axial direction of the housing to form a "spring-like" spiral structure. The number of spirally ascending layers may be multiple or single, as long as it can weaken or cancel the magnetic field generated by the redundant length of the negative plate, which is not limited herein.

According to another aspect of this disclosure, an electronic device is provided, including the above battery apparatus and a speaker 12. The battery apparatus and the speaker 12 are provided inside the electronic device. One end-face of the battery apparatus is opposite to the speaker 12.

Under the condition that the positive end-face 1 of the battery apparatus is facing towards the speaker 12, the electric connector is provided on the positive end-face 1. The direction from the first end 3 to the second end 4 of the electric connector is the same as the winding direction of the cell 11.

Under the condition that the negative end-face 2 of the battery apparatus is facing towards the speaker 12, the electric connector is provided on the negative end-face 2. The direction from the first end 3 to the second end 4 of the electric connector is opposite to the winding direction of the cell 11.

For example, the electronic device may be a mobile phone, a headphone, an electronic pen, VR, AR, etc.

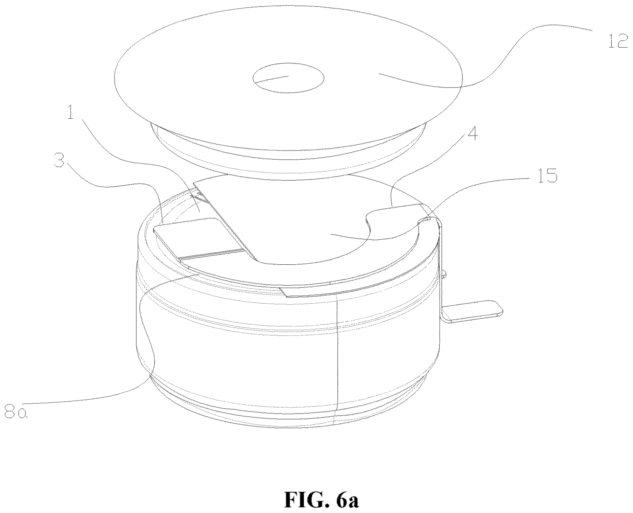

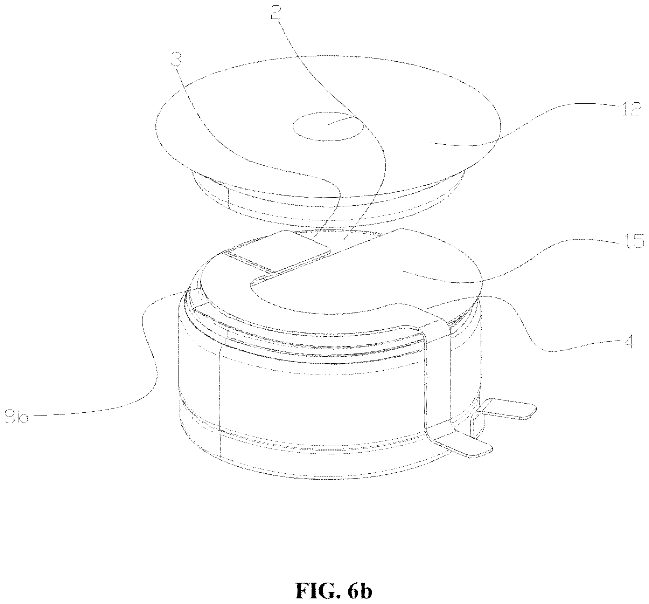

As shown in FIGS. 6a-6b, taking the headphone as an example, both the battery apparatus and the speaker are installed inside the headphone, and the battery apparatus is used for providing power to the headphone. Since the electric connector is installed on the positive end-face 1 and/or the negative end-face 2 of the battery apparatus, when the positive end-face 1 or the negative end-face 2 of the battery apparatus is provided facing towards the speaker 12, the electric connector is located between the positive end-face 1 or the negative end-face 2 of the battery apparatus and the speaker 12, such that during the charging and discharging of the battery apparatus, the electric connector may cancel the magnetic field generated by the redundant length of the negative plate of the cell 11 inside the battery apparatus, thereby preventing the headphone from producing a noise floor due to the magnetic field to degrade the sound quality. This results in good sound quality for the headphone and provides the user with a pleasant experience.

For example, under the condition that the positive end-face 1 of the battery apparatus is facing towards the speaker 12, the electric connector is provided on the positive end-face 1, such that the electric connector is located between the positive end-face 1 and the speaker 12. Since the direction from the first end 3 to the second end 4 of the electric connector is the same as the winding direction of the cell 11, the magnetic field generated by the electric connector positioned on the positive end-face 1 may weaken or cancel the magnetic field generated by the redundant length of the negative plate.

For example, under the condition that the negative end-face 2 of the battery apparatus is facing towards the speaker 12, the electric connector is provided on the negative end-face 2, such that the electric connector is located between the negative end-face 2 and the speaker 12. Since the direction from the first end 3 to the second end 4 of the electric connector is the same as the winding direction of the cell 11, the magnetic field generated by the electric connector positioned on the negative end-face 2 may weaken or cancel the magnetic field generated by the redundant length of the negative plate.

Although specific embodiments of the present disclosure have been described in detail through examples, those skilled in the art should understand that the above examples are only for illustration and are not intended to limit the scope of the present disclosure. Those skilled in the art should understand that the above embodiments can be modified without departing from the scope and spirit of the present disclosure. The scope of the present disclosure is defined by the appended claims.

## Claims

1. A battery apparatus, **characterized by** comprising: a housing, a cell and an electric connector; the cell is provided inside the housing, is connected to the housing, is in a spirally wound structure, and comprises a positive plate and a negative plate, a length of the negative plate being greater than that of the positive plate to form a redundant length;
the housing comprises a positive end-face which is opposite to one end-face of the cell, and a negative end-face which is opposite to the other end-face of the cell;
the electric connector is provided around a middle part of the positive end-face and/or the negative end-face and has a first end and a second end which are spaced apart, the first end is connected to the positive end-face and/or the negative end-face, and the electric connector is configured for weakening or cancelling a magnetic field generated by the redundant length of the negative plate.

2. The battery apparatus according to claim 1, wherein the electric connector comprises a first segment and a second segment which are connected, the first end is located on the first segment, the second end is located on the second segment, the second segment is provided around the middle part of the positive end-face and/or the negative end-face, and the second segment is spaced apart from the positive end-face and/or the negative end-face.

3. The battery apparatus according to claim 1, wherein the first end is welded to the positive end-face and/or the negative end-face.

4. The battery apparatus according to claim 1, wherein the electric connector as a whole is arc-shaped or polygonal.

5. The battery apparatus according to claim 2, wherein a separator is provided between the second segment and the positive end-face and/or the negative end-face of the housing.

6. The battery apparatus according to claim 2, wherein the electric connector further comprises a third segment, which is connected to the second segment and extends outward along a side wall of the housing.

7. The battery apparatus according to claim 1, wherein the electric connector is arc-shaped, and an outer diameter of the arc is 0.8 to 0.9 times a diameter of the positive end-face and/or the negative end-face of the housing; an inner diameter of the arc is 0.6 to 0.7 times the diameter of the positive end-face and/or the negative end-face of the housing.

8. The battery apparatus according to claim 1, wherein the electric connector is made of Ni or Ni-plated steel sheet.

9. The battery apparatus according to claim 1, wherein the electric connector spirally ascends along an axial direction of the housing, and the electric connector is constructed in multiple layers.

10. An electronic device, **characterized by** comprising the battery apparatus according to any of claims 1 to 9 and a speaker, the battery apparatus and the speaker are provided inside the electronic device, and one end-face of the battery apparatus is opposite to the speaker;
under a condition that the positive end-face of the battery apparatus is facing towards the speaker, the electric connector is provided on the positive end-face, and a direction from the first end to the second end of the electric connector is the same as a winding direction of the cell; and
under a condition that the negative end-face of the battery apparatus is facing towards the speaker, the electric connector is provided on the negative end-face, and the direction from the first end to the second end of the electric connector is opposite to the winding direction of the cell.
